(19) Europäisches Patentamt
European Patent Office
Office européen des brevets

(11) **EP 3 899 295 B1**

(12) **EUROPÄISCHE PATENTSCHRIFT**

(45) Veröffentlichungstag und Bekanntmachung des Hinweises auf die Patenterteilung:
**20.07.2022   Patentblatt 2022/29**

(21) Anmeldenummer: **19828588.4**

(22) Anmeldetag: **10.12.2019**

(51) Internationale Patentklassifikation (IPC):
***F16C 17/02*** *(2006.01)*

(52) Gemeinsame Patentklassifikation (CPC):
**F16C 17/028;** F16C 2240/30; F16C 2240/70

(86) Internationale Anmeldenummer:
**PCT/EP2019/084334**

(87) Internationale Veröffentlichungsnummer:
**WO 2020/126643 (25.06.2020 Gazette 2020/26)**

(54) **HYDRODYNAMISCHES GLEITLAGER**

HYDRODYNAMIC SLIDING BEARING

PALIER LISSE HYDRODYNAMIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.12.2018   DE 102018133279**

(43) Veröffentlichungstag der Anmeldung:
**27.10.2021   Patentblatt 2021/43**

(73) Patentinhaber: **Voith Patent GmbH**
**89522 Heidenheim (DE)**

(72) Erfinder: **RUDOLPH, Herr Ralph**
**88316 Isny (DE)**

(74) Vertreter: **Voith Patent GmbH - Patentabteilung**
**St. Pöltener Straße 43**
**89522 Heidenheim (DE)**

(56) Entgegenhaltungen:
**DE-A1-102008 045 168     RU-C1- 2 013 672**

EP 3 899 295 B1

**Beschreibung**

Die Erfindung betrifft ein hydrodynamisches Gleitlager mit einer Lagerschale, deren innere Oberfläche eine Lagerfläche für eine umlaufende Welle ausbildet, wobei die Lagerfläche zur Ausbildung eines Lagers mit Mehrkeilbohrung wenigstens zwei in Umfangsrichtung der Lagerschale hintereinander angeordnete Flächenabschnitte aufweist.

Solche Lager werden als Mehrflächenlager bezeichnet, bei denen die einzelnen Flächenabschnitte jeweils einen Keilspalt (Mehrkeilbohrung) und somit auch einen jeweiligen Druckaufbau in einem Schmieröl erzeugen, sodass unterschiedliche stationäre und dynamische Betriebseigenschaften eines Lagers vorsehbar sind. Ein derartiges hydrodynamisches Gleitlager ist beispielsweise aus der internationalen Patentanmeldung WO 2015/107048 A2 bekannt. Dieses Gleitlager zeichnet sich neben guten dynamischen Eigenschaften auch durch eine gute Lagerdämpfung sowie einen guten Wärmehaushalt aus. Es hat sich jedoch herausgestellt, dass ein allgemein nach dieser Anmeldung ausgeführtes Gleitlager einen eher hohen Ölverbrauch und eine entsprechend hohe Verlustleistung aufweist.

Weitere Gleitlagerausführungen sind aus den Druckschriften RU 2013 672 C1 und DE 10 2008 045 168 A1 vorbekannt.

Hiervon ausgehend stellt sich die Erfindung die Aufgabe, ein verbessertes hydrodynamisches Gleitlager mit einem geringeren Ölverbrauch und geringerer Verlustleistung vorzuschlagen, ohne erhöhte Lagertemperaturen zu hervorrufen. Dies wird erfindungsgemäß durch die Lehre der unabhängigen Ansprüche erreicht. Vorteilhafte Ausbildungen der Erfindung sind Gegenstand der Unteransprüche.

Zur Lösung der Aufgabe wird ein hydrodynamisches Gleitlager vorgeschlagen, mit einer Lagerschale, deren innere Oberfläche eine Lagerfläche für eine umlaufende Welle ausbildet. Zur Ausbildung eines Lagers mit Mehrkeilbohrung weist die Lagerfläche wenigstens zwei in Umfangsrichtung der Lagerschale hintereinander angeordnete Flächenabschnitte auf, wobei wenigstens ein Flächenabschnitt ein

Lastsegment ausbildet und wenigstens ein Flächenabschnitt ein Nichtlastsegment ausbildet. In die wenigstens zwei Flächenabschnitte ist in einem Axialschnitt jeweils ein Kreis einbeschreibbar, der einen größeren Radius aufweist, als den Radius der umlaufenden Welle. Ferner weisen die Mittelpunkte der wenigstens zwei einbeschriebenen Kreise jeweils eine Exzentrizität gegenüber dem Mittelpunkt der Lagerschale auf, wobei die Exzentrizität des Lastsegments größer ist, als die Exzentrizität des Nichtlastsegments.

Das hydrodynamische Gleitlager weist eine Lagerschale auf, welche an ihrer inneren Oberfläche eine Lagerfläche für eine im Gleitlager gelagerte, umlaufende Welle ausbildet. Als Welle wird im Sinne der vorliegenden Anmeldung jedes wenigstens abschnittsweise im Bereich der Lagerung zylinderförmige, um die Mittellinie rotierende, drehmomentübertragende Bauteil insbesondere einer Maschinenbaugruppe verstanden. Die am inneren Umfang der Lagerschale des Gleitlagers angeordnete Lagerfläche weist dabei wenigstens zwei in Umfangsrichtung hintereinander angeordnete Flächenabschnitte auf, welche insbesondere durch einen radialen Versatz an ihrem Übergang einen Keilspalt bilden und auf diese Weise ein Lager mit Mehrkeilbohrung ausbilden. Wenigstens ein solcher Flächenabschnitt bildet ein Lastsegment aus, welches zur Aufnahme größerer Lagerkräfte vorgesehen ist und wenigstens ein Flächenabschnitt ein Nichtlastsegment, in welchem üblicherweise keine oder geringere Lagerkräfte wirken. Zwischen der äußeren Umfangsfläche der umlaufenden bzw. rotierbaren Welle und den die innere Umfangsfläche des Gleitlagers bildenden Flächenabschnitten bildet sich, bei entsprechender Ölversorgung, während einer Rotation der Welle ein hydrodynamischer Schmierfilm aus.

Bei der vorgeschlagenen Gestaltung des hydrodynamischen Gleitlagers ist in einem senkrecht zur Lagerachse angeordneten Axialschnitt jeweils ein Kreis in jeden der wenigstens zwei Flächenabschnitte einbeschreibbar, der einen größeren Radius aufweist, als den Radius der umlaufenden Welle. Entsprechend weist ein solcher Flächenabschnitt im Axialschnitt eine insgesamt konvexe Form auf, welche insbesondere wenigstens annäherungsweise kreisförmig bzw. kreisbogenförmig ist. Insbesondere dadurch, dass im Axialschnitt ein in einen Flächenabschnitt einbeschreibbarer Kreis einen größeren Radius aufweist, als den Radius der umlaufenden Welle, ist der Flächenabschnitt zum Lagern der umlaufenden Welle, insbesondere unter Ausbildung eines geeigneten Schmierfilms im sich dadurch ergebenden Lagerspalt, geeignet.

Die Mittelpunkte der wenigstens zwei einbeschreibbaren Kreise weisen jeweils eine Exzentrizität e gegenüber dem Mittelpunkt der Lagerschale auf, d. h. die Mittelpunkte der einbeschreibbaren Kreise weisen einen Abstand in Größe der Exzentrizität vom Mittelpunkt der Lagerschale auf. Durch den sich hieraus ergebenden Versatz der Mittelpunkte der in die Flächenabschnitte einbeschreibbaren Kreise ergibt sich eine Lagerfläche in Form einer Mehrkeilbohrung. Bei der vorgeschlagenen Gestaltung ist die Exzentrizität des Lastsegments größer, als die Exzentrizität des Nichtlastsegments, wodurch ein unterschiedliches Lagerverhalten in den einzelnen Segmenten, insbesondere bezüglich der Tragfähigkeit von Last- und Nichtlastsegment einstellbar ist. Ferner ergibt sich hieraus eine Lagergeometrie mit einem geringen Ölverbrauch, welche zudem eine ausreichende Dämpfung der gelagerten Welle ermöglicht.

Unter dem Lastsegment wird dabei insbesondere das Segment verstanden, welches während des Betriebes die größeren Kräfte aufnimmt.

Das vorgeschlagene hydrodynamische Gleitlager weist somit einen geringeren Ölverbrauch und eine geringere Verlustleistung auf, ohne die Lagertemperaturen wesentlich zu erhöhen. Zudem ermöglicht die vorgeschlagene Gestaltung eine ausreichende Dämpfung des Lagers sowohl im lastlosen Lauf der umlaufenden Welle als auch im Volllastfall.

Bei einer Ausführungsform des hydrodynamischen Gleitlagers beträgt die Differenz zwischen den Exzentrizitäten zwischen 10% und 70%. Durch diesen großen Bereich möglicher Exzentrizitäten, können Flächenabschnitte mit unterschiedlichem Lagerverhalten insbesondere an verschiedenen Positionen eines hydrodynamischen Gleitlagers vorgesehen werden.

Erfindungsgemäß sind die Mittelpunkte der in die wenigstens zwei Flächenabschnitte einbeschreibbaren Kreise in einer durch den Mittelpunkt der Lagerschale verlaufenden Versatzebene angeordnet. Die jeweilige Exzentrizität entspricht dem Abstand des Mittelpunkts eines einbeschriebenen Kreises zum Lagermittelpunkt in der Versatzebene. Insbesondere bei Lagergestaltungen mit zwei gegenüberliegend angeordneten Flächenabschnitten ist eine Gestaltung vorteilhaft, bei welcher die Mittelpunkte der einbeschreibbaren Kreise auf verschiedenen Seiten des Lagermittelpunkts auf der Versatzebene angeordnet sind.

Erfindungsgemäß grenzen wenigstens zwei Flächenabschnitte an einen zwischen ihnen angeordneten Versatz an. Aufgrund verschiedener Exzentrizitäten der Flächenabschnitte kann sich an der Umfangsposition, an welcher die Flächenabschnitte aneinander angrenzen, ein radialer Versatz beispielsweise in Form einer Stufe zwischen den von den Flächenabschnitten ausgebildeten Lagerflächen ergeben. Ein solcher Versatz bildet einen Keilspalt in der Lagerfläche des hydrodynamischen Gleitlagers aus. Bei einer Ausführungsform des hydrodynamischen Gleitlagers ist an der Lagerfläche wenigstens eine Ölversorgungstasche angeordnet, die in einem Taschenlagewinkel in Drehrichtung der Welle nach dem Versatz angeordnet ist. Dadurch, dass die wenigstens eine Ölversorgungstasche in Drehrichtung der Welle nach dem Versatz angeordnet ist, steht der umlaufenden Welle Öl zur Ausbildung eines Ölfilms im Gleitlager zur Verfügung. Vorteilhaft ist der Taschenlagewinkel bei der vorgeschlagenen Ausführungsform zwischen 0° bis 40° groß. Dabei ist das Winkelmaß hier als auch bei folgenden Winkelangaben in Grad angegeben, welches den 360. Teil des Vollwinkels darstellt.

Die für diese Ausführungsform vorgeschlagene Anordnung einer Ölversorgungstasche mit einem Taschenlagewinkel zwischen 0° und 40° in Drehrichtung der Welle nach einem Versatz ermöglicht eine gute Ölversorgung insbesondere des Flächenabschnitts, der in Drehrichtung der Welle an die Ölversorgungstasche anschließt. In diesem Flächenabschnitt kann sich aufgrund der vorgeschlagenen Lage der Ölversorgungstasche ein geeigneter Schmierfilm mit entsprechenden dynamischen und statischen Eigenschaften aufbauen. Durch die vorgeschlagene Gestaltung wird ferner eine optimale Nutzung des verwendeten Schmieröls erreicht.

Bei einer Ausführungsform des hydrodynamischen Gleitlagers ist der Taschenlagewinkel, in welchem eine erste Ölversorgungstasche in Drehrichtung der Welle nach einem ersten Versatz angeordnet ist, unabhängig von dem Taschenlagewinkel, in welchem eine zweite Ölversorgungstasche in Drehrichtung der Welle nach einem zweiten Versatz angeordnet ist. Entsprechend kann der Taschenlagewinkel unabhängig von in anderen Flächenabschnitten vorliegenden Randbedingungen spezifisch für die im vorliegenden Flächenabschnitt relevanten Randbedingungen ausgeführt sein.

Der Taschenlagewinkel ist in Drehrichtung als Winkel zwischen der Versatzpunktebene und Mitte der Ölversorgungstasche definiert.

Gemäß einer besonders vorteilhaften Ausbildung liegt der Taschenlagewinkel des Lastsegmentes im Bereich zwischen 20° und 30°, besonders bevorzugt zwischen 20° und 25° nach Versatzpunktebene. Der Taschenlagewinkel des Nichtlastsegmentes liegt vorzugsweise im Bereich von 30° bis 35° nach Versatzpunktebene.

Die besondere Kombination der 6 Parameter in Lastsegment und Nichtlastsegment, welche jeweils den Taschenlagewinkel, die Breite der Öltasche und den Taschenwinkel beschreiben, ergibt ein Lager, welches im Vergleich zu einem nichtoptimierten Zitronenoffsetlager, wie z.B. aus der EP3094873 bekannt, eine wesentlich niedrigere Verlustleistung und einen stark reduzierten Ölverbrauch aufweist.

Bei einer Ausführungsform des hydrodynamischen Gleitlagers ist jede Ölversorgungstasche mit einer Ölbohrung zur Versorgung des Gleitlagers mit Öl verbunden. Als Ölbohrung wird dabei im Zusammenhang mit der vorliegenden Erfindung jede in die Ölversorgungstasche mündende ein- oder mehrteilige Öffnung mit geeignetem Querschnitt zum Versorgen der Ölversorgungstasche mit Öl verstanden. Der Querschnitt der Ölbohrung einer Ölversorgungstasche eines Gleitlagers mit größerem Lagernenndurchmesser ist dabei insbesondere aufgrund des größeren Ölbedarfs der größeren Lagerfläche üblicherweise größer, als der Querschnitt der Ölbohrung einer Ölversorgungstasche eines Gleitlagers mit kleinerem Lagernenndurchmesser.

Bei einer Ausführungsform des hydrodynamischen Gleitlagers ist der erste Öffnungswinkel, der insbesondere die Größe der Öffnung einer ersten Ölversorgungstasche entlang der Lagerfläche beschreibt, unabhängig von einem zweiten Öffnungswinkel, der insbesondere die Größe der Öffnung einer zweiten Ölversorgungstasche entlang der Lagerfläche beschreibt. Entsprechend kann der Öffnungswinkel einer Ölversorgungstasche spezifisch für die im vorliegenden Flächenabschnitt relevanten Randbedingungen und unabhängig von Randbedingungen in anderen Flächenabschnitten ausgeführt sein. Bei einer weiter vorteilhaften Ausführungsform beträgt der Öffnungswinkel einer Ölversorgungstasche zwischen 10° und 30° und insbesondere zwischen 12° und 22°.

In einer vorteilhaften Ausführung ist der Öffnungswinkel der Ölversorgungstasche am Lastsegment größer als am Nichtlastsegment. Dabei beträgt der Öffnungswinkel, der insbesondere die Größe der Öffnung der Ölversorgungstasche entlang der Lagerfläche beschreibt, für die Ölversorgungstasche am Lastsegment beispielsweise zwischen 15° und 20 °, am Nichtlastsegment zwischen 14° und 18°.

Bei einer Ausführungsform des hydrodynamischen Gleitlagers ist die Breite einer ersten Ölversorgungstasche an der Lagerfläche unabhängig von der Breite einer zweiten Ölversorgungstasche an der Lagerfläche. Hierdurch kann die Breite einer Ölversorgungstasche spezifisch für die im vorliegenden Flächenabschnitt relevanten Randbedingungen und unabhängig von Randbedingungen in anderen Flächenabschnitten ausgeführt sein.

In einer besonders vorteilhaften Ausbildung ist jedoch das Verhältnis der Breite der Ölversorgungstasche am Lastsegment zur Breite des Lagers im Bereich von jeweils einschließlich 0,6 bis 0,7, das Verhältnis der Breite der Ölversorgungstasche am Nicht-Lastsegment zur Breite des Lagers im Bereich von jeweils einschließlich 0,35 bis 0,5.

Jedes Geometriedetail für sich führt dazu, dass das Öl nur in Bereiche des Lagers gelangt, wo es für die Funktion des Lagers unabdingbar ist. Dabei werden Teile des Schmierspaltes, der als Spalt zwischen der Lagerschale und der Welle definiert ist, nicht vollständig mit Öl gefüllt. Dadurch ergeben sich ein niedrigerer Ölbedarf des Lagers und eine niedrigere Verlustleistung, weil die nicht vollständig gefüllten Bereiche eine geringere Scherung des Ölfilmes aufweisen.

Durch die vorausgehend genannten unabhängigen Variationsmöglichkeiten bei der Gestaltung von Ölversorgungstaschen des vorgeschlagenen hydrodynamischen Gleitlagers können diese entsprechend den spezifischen Erfordernissen der jeweiligen Flächenabschnitte ausgeführt sein.

Erfindungsgemäß sind zwei zwischen Flächenabschnitten angeordnete Versätze diametral gegenüberliegend in einer durch den Mittelpunkt der Lagerschale verlaufenden Versatzpunktebene angeordnet. Diese Versatzpunktebene ist dabei in einem Versatzwinkel $\gamma$ zur Versatzebene angeordnet, welche ebenfalls durch den Mittelpunkt der Lagerschale verläuft und in welcher die Mittelpunkte der in die wenigstens zwei Flächenabschnitte einbeschreibbaren Kreise angeordnet sind. Der Versatzwinkel $\gamma$ zwischen der Versatzpunktebene und der Versatzebene beträgt erfindungsgemäß zwischen 0° und 40°. Bei einer weiter vorteilhaften Ausführungsform beträgt der Versatzwinkel $\gamma$ zwischen 15° und 25°.

Erfindungsgemäß weist das hydrodynamische Gleitlager eine virtuelle Teilfugenebene auf, die in einem Teilfugenwinkel $\vartheta$ gegenüber der Versatzpunktebene verschwenkt angeordnet ist. Bei einer Ausführungsform ist die virtuelle Teilfugenebene beispielsweise um einen Teilfugenwinkel $\vartheta$ von 20° gegenüber der Versatzpunktebene verschwenkt, wobei je nach Auslegung des vorgeschlagenen hydrodynamischen Gleitlagers die Größe des Teilfugenwinkels $\vartheta$ auch größer oder kleiner als 20° wählbar ist.

Bei einer Ausführungsform des hydrodynamischen Gleitlagers ist die Schalenmitte in einem Mittenwinkel $\varepsilon$ zur virtuellen Teilfugenebene angeordnet, welcher insbesondere 90° beträgt. Die Geometrie des Gleitlagers mit virtueller Teilfugenebene und der hierzu in einem Mittenwinkel $\varepsilon$ angeordneten Schalenmitte werden bei der Auslegung des Lagers entsprechend der bei der vorgesehenen Anwendung wirkenden Lastverteilung sowie der vorgesehenen Einbaulage festgelegt.

Bei einer Ausführungsform des hydrodynamischen Gleitlagers ist das Gleitlager für einen Standardlastwinkel $\varphi$ vorgesehen, der in Drehrichtung der Welle bezogen auf die Schalenmitte zwischen -10° und 25° und insbesondere zwischen 5° und 10° beträgt. Für einen derartigen Standardlastfall ergibt sich mit Werten, die optional vorausgehend für die einzelnen Parameterbereiche vorgeschlagen wurden, eine vorteilhafte Auslegung für ein hydrodynamisches Gleitlager.

Bei einer Ausführungsform des hydrodynamischen Gleitlagers weist die Lagerschale zwei Lagerschalenhälften auf, die sich jeweils über 180° (Halbkreis) der Lagerfläche erstrecken und an einer Trennfuge in einer Trennfugenebene zusammengefügt sind. Eine solche Gestaltung ermöglicht ein radiales Einsetzen einer Welle in eine zweiteilige Lagerschale.

Bei einer Ausführungsform des hydrodynamischen Gleitlagers ist die Trennfugenebene in einem Trennfugenwinkel $\delta$ gegenüber der Versatzebene verschwenkt, wobei der Trennfugenwinkel $\delta$ zwischen 10° und 80° beträgt. Bei einer weiter vorteilhaften Ausführungsform beträgt der Trennfugenwinkel $\delta$ zwischen 35° und 45°. Bei einer Ausführungsform des hydrodynamischen Gleitlagers entspricht die Trennfugenebene der virtuellen Teilfugenebene.

Bei einer Ausführungsform des hydrodynamischen Gleitlagers ist die Geometrie wenigstens eines Flächenabschnitts als mathematische Funktion beschreibbar. Dabei kann die Geometrie wenigstens eines Flächenabschnitts beispielsweise ein Kreisbogen, ein Ellipsenbogen, ein Hyperbelbogen, ein Parabelbogen oder auch ein Kurvenabschnitt mit einer mathematischen Ordnung von zwei oder höher sein. Entsprechend ist die Geometrie wenigstens eines Flächenabschnitts des hydrodynamischen Gleitlagers ausgehend von der spezifisch vorgesehenen Lastverteilung am Gleitlager auslegbar.

Bei einer Ausführungsform des hydrodynamischen Gleitlagers weisen die wenigstens zwei Flächenabschnitte eine unterschiedliche Profilierung $\psi v$ auf. Die Profilierung $\psi v$ ist dabei definiert durch die Summe aus der Exzentrizität e des jeweiligen Flächenabschnitts und dem radialem Lagerspiel Ls, bezogen auf das radiale Lagerspiel Ls:

$$\psi v = \frac{e + Ls}{Ls}$$

Durch eine unterschiedliche Profilierung $\psi v$ können die Flächenabschnitte mit unterschiedlichen Trageigenschaften versehen werden. So ist bei einer Ausführungsform die Profilierung $\psi v$ des Lastsegments größer, als die Profilierung des Nichtlastsegments, um insbesondere größere Lagerkräfte im Lastsegment aufnehmen zu können.

Bei einer Ausführungsform des hydrodynamischen Gleitlagers liegt sowohl die Profilierung $\psi v$ des Lastsegments als auch die Profilierung $\psi v$ des Nichtlastsegments in einem Bereich von 1 bis 3. Flächenabschnitte, deren Profilierung einen Wert in diesem Bereich aufweist, können sowohl als Last- oder auch Nichtlastsegment ausgelegt sein. Bei einer Ausführungsform liegt die Profilierung $\psi v$ des Lastsegments, in welchem üblicherweise höhere Lagerkräfte wirken, in einem Bereich von 1,5 bis 1,8. Bei dieser oder anderen Ausführungsformen liegt die Profilierung $\psi v$ des Nichtlastsegments, in welchem üblicherweise geringere Lagerkräfte wirken, in einem Bereich von 1,2 bis 1,5. Entsprechend wird vorgeschlagen, bei einer Ausführungsform die Profilierung des Lastsegments höher zu wählen als die Profilierung des Nichtlastsegments.

Aufgrund der Wirkung eines oder mehrerer der vorbeschriebenen Merkmale weist das vorgeschlagene hydrodynamische Gleitlager einen geringeren Ölverbrauch sowie eine geringere Verlustleistung auf, ohne dass sich hieraus eine wesentliche Erhöhung der Lagertemperaturen gegenüber bekannten Gleitlagern ergibt. Die vorteilhafte Gestaltung des hydrodynamischen Gleitlagers ermöglicht zudem sowohl im lastlosen Lauf der umlaufenden Welle als auch im Volllastfall eine ausreichende Dämpfung des Lagers.

Weitere Merkmale, Vorteile und Anwendungsmöglichkeiten der Erfindung ergeben sich aus der nachfolgenden Beschreibung im Zusammenhang mit den Figuren. Es zeigt:

Fig. 1 eine dreidimensionale Darstellung eines beispielhaften erfindungsgemäßen hydrodynamischen Gleitlagers mit überhöht dargestellten Merkmalen;

Fig. 2 eine Darstellung eines Axialschnitts der Innenkontur des beispielhaften hydrodynamischen Gleitlagers aus Fig. 1, ebenfalls mit überhöht dargestellten Merkmalen;

Fig. 3 die Darstellung des Axialschnitts der Innenkontur aus Fig. 2 mit weiteren Details;

Fig. 4 die dreidimensionale Darstellung des beispielhaften hydrodynamischen Gleitlagers aus Fig. 1, wobei zu Fig. 2 und Fig. 3 beschriebene Details gezeigt sind; und

Fig. 5 eine Darstellung eines Axialschnitts der Innenkontur einer weiteren Ausführungsform eines erfindungsgemäßen beispielhaften hydrodynamischen Gleitlagers mit ebenfalls überhöht dargestellten Merkmalen.

In den Figuren sind zwei Ausführungsformen beispielhafter erfindungsgemäßer hydrodynamischer Gleitlager 1 dargestellt. Insbesondere die in den Ansprüchen hinsichtlich vorteilhafter Weiterbildungen vorgeschlagenen Merkmale des Gleitlagers 1 sind in den Figuren zur besseren Anschauung und Erklärbarkeit überhöht gezeigt.

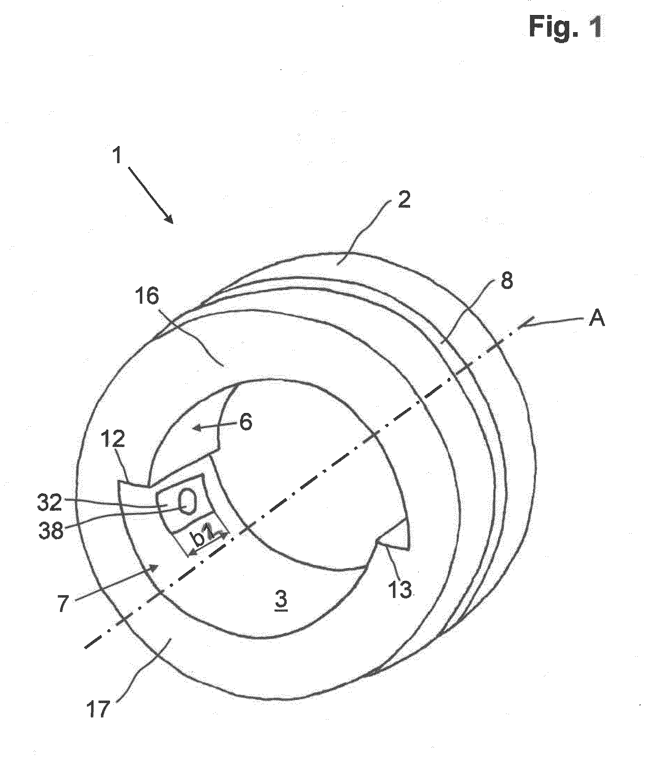

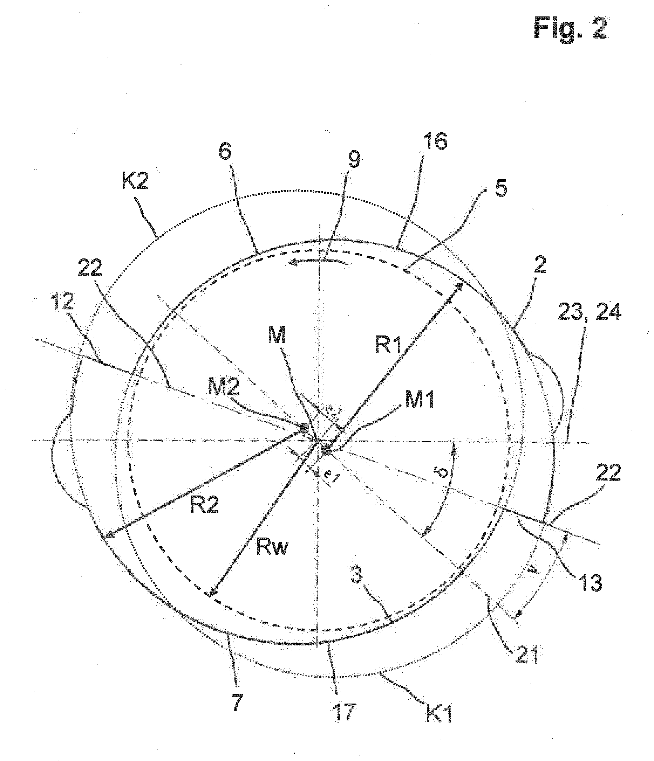

Fig. 1 zeigt eine dreidimensionale Darstellung eines beispielhaften erfindungsgemäßen hydrodynamischen Gleitlagers 1 mit einer Lagerschale 2. Die innere Oberfläche der Lagerschale 2 bildet eine Lagerfläche 3 für eine umlaufende Welle 5 (in Fig. 2 dargestellt) aus. Die Lagerfläche 3 weist dabei zur Ausbildung eines Lagers mit Mehrkeilbohrung wenigstens zwei in Umfangsrichtung der Lagerschale 1 hintereinander angeordnete Flächenabschnitte 6, 7 auf, wobei wenigstens ein Flächenabschnitt 7 ein Lastsegment 17 ausbildet und wenigstens ein Flächenabschnitt 6 ein Nichtlastsegment 16 ausbildet. Am äußeren Umfang der Lagerschale 2 ist umlaufend eine Ölversorgungsnut 8 angeordnet, welche zur Versorgung des Gleitlagers 1 mit Schmieröl dient.

Im Flächenabschnitt 6 ist ferner eine Ölversorgungstasche 32 dargestellt, welche mit einer Ölbohrung 38 zur Versorgung des Gleitlagers 1 mit Öl verbunden ist. Die Ölbohrung 38 stellt dabei eine Verbindung zwischen der umlaufenden Ölversorgungsnut 8 und der Ölversorgungstasche 32 her. Die Ölversorgungstasche 32 im Lastsegment 17 weist ferner eine Breite b2 an der Lagerfläche 3 auf, welche insbesondere abhängig von den erwünschten Schmiereigenschaften festgelegt wird. Weitere Eigenschaften der Ölversorgungstasche 32 werden weiter unten näher beschrieben.

Wie in Fig. 2 gezeigt ist, die einen Axialschnitt der Innenkontur des beispielhaften erfindungsgemäßen hydrodynamischen Gleitlagers aus Fig. 1 schematisch zeigt, ist in die wenigstens zwei Flächenabschnitte 6, 7 jeweils ein Kreis K1, K2 einbeschreibbar, der einen größeren Radius R1, R2 aufweist, als den Radius Rw der umlaufenden Welle 5. Die Mittelpunkte M1, M2 der wenigstens zwei einbeschriebenen Kreise K1, K2 weisen jeweils eine Exzentrizität e1, e2 gegenüber dem Mittelpunkt M der Lagerschale 2 auf. Bei der beispielhaften erfindungsgemäßen Ausführungsform des hydrodynamischen Gleitlagers 1 ist die Exzentrizität e2 des Lastsegments 17 größer als die Exzentrizität e1 des Nichtlastsegments 16.

Die Mittelpunkte M1, M2 der in die wenigstens zwei Flächenabschnitte 6, 7 einbeschriebenen Kreise K1, K2 sind in einer durch den Mittelpunkt M der Lagerschale 2 verlaufenden Versatzebene 21 angeordnet. Dabei entspricht die jeweilige Exzentrizität e1, e2 dem Abstand des Mittelpunkts M1, M2 des einbeschriebenen Kreises K1, K2 vom Mittelpunkt M der Lagerschale 2 in der Versatzebene 21. In einer ebenfalls durch den Mittelpunkt M der Lagerschale 2 verlaufenden Versatzpunktebene 22, welche in einem Versatzwinkel γ entlang der Lagerachse A zur Versatzebene 21 geneigt ist, sind die beiden zwei Versätze 12, 13 des beispielhaften hydrodynamischen Gleitlagers 1 diametral gegenüberliegend angeordnet. Die beiden zwischen den Flächenabschnitten 6, 7 angeordneten Versätze 12, 13 resultieren aus den unterschiedlichen Radien R1, R2 sowie aus den Exzentrizitäten e1, e2 der Flächenabschnitte 6, 7. Bei den beiden Versätzen 12, 13 handelt es sich um in der Versatzpunktebene 22 angeordnete Verbindungsflächen "Stufen" zwischen den Flächenabschnitten 6, 7.

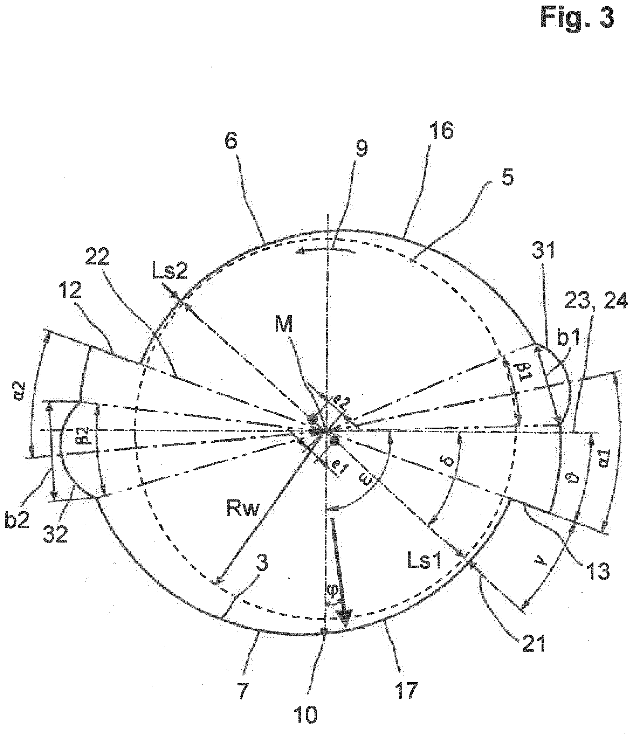

In Fig. 3 ist eine weitere Darstellung des Axialschnitts der Innenkontur des beispielhaften erfindungsgemäßen hydrodynamischen Gleitlagers 1 aus Fig. 1 gezeigt. Gegenüber der Darstellung aus Fig. 2 wurde in Fig. 3 zur besseren Übersichtlichkeit auf die Darstellung der Radien und Mittelpunkte der in die Flächenabschnitte 6, 7 einbeschreibbaren Kreise verzichtet.

An der Lagerfläche 3 sind zwei Ölversorgungstaschen 31, 32 dargestellt, die in der Schnittdarstellung Ausbuchtungen in der Lagerfläche 3 darstellen. Die Ölversorgungstaschen 31, 32 sind jeweils in einem Taschenlagewinkel α1, α2 in Drehrichtung 9 der Welle 5 nach einem Versatz 12, 13 angeordnet, wobei sich der Taschenlagewinkel α1, α2 bei der beispielhaften Ausführungsform auf die jeweilige Mitte der Ölversorgungstasche 31, 32 bezieht. Wie in Fig. 3 erkennbar ist, ist der Taschenlagewinkel α1 der Ölversorgungstasche 31 dabei größer als der Taschenlagewinkel α2 der Ölversorgungstasche 32.

Die Öffnung der Ölversorgungstaschen 31, 32 entlang der Lagerfläche 3 wird durch die Öffnungswinkel β1, β2 beschrieben. Der Öffnungswinkel β2 der Ölversorgungstasche 32 ist dabei größer als der Öffnungswinkel β1 der Ölversorgungstasche 31.

Das beispielhafte hydrodynamische Gleitlager 1 weist ferner eine virtuelle Teilfugenebene 23 auf, die in einem Teilfugenwinkel ϑ gegenüber der Versatzpunktebene 22 verschwenkt angeordnet ist. Der Teilfugenwinkel ϑ beträgt bei der beispielhaften Ausführungsform 20°. Das hydrodynamische Gleitlager 1 weist zudem eine Trennfugenebene 24 auf, die in einem Trennfugenwinkel δ gegenüber der Versatzebene 21 verschwenkt angeordnet ist. An der Trennfugenebene 24 ist das Gleitlager 1 geteilt, um den Einbau der Welle 5 zu ermöglichen. In der dargestellten beispielhaften Ausführungsform entspricht die Trennfugenebene 24 der virtuellen Teilfugenebene 23.

Die Schalenmitte 10 der Lagerschale 2 des hydrodynamischen Gleitlagers 1 ist in einem Mittenwinkel ε zur virtuellen Teilfugenebene 23 angeordnet, der bei der beispielhaften Ausführungsform 90° beträgt. Die in den Figuren beschriebene beispielhafte Ausführungsform des hydrodynamischen Gleitlagers 1 ist für einen in Fig. 3 eingezeichneten Standardlastwinkel φ vorgesehen, in welchem bei der vorgesehenen Lagerbelastung die Hauptlast wirkt. Der Standardlastwinkel φ beträgt bei der Ausführungsform in Drehrichtung 9 der Welle 5 bezogen auf die Schalenmitte 10 etwa 8°.

Die beiden zwei Flächenabschnitte 6, 7 des hydrodynamischen Gleitlagers 1 weisen ferner eine unterschiedliche Profilierung ψv auf, welche definiert ist durch die Summe aus den Exzentrizitäten e1 und e2 der Flächenabschnitte 6, 7 und dem radialem Lagerspiel Ls1 bzw. Ls2, bezogen auf das radiale Lagerspiel Ls1 bzw. Ls2. Die Profilierung ψv des Lastsegments 17 ist dabei größer, als die Profilierung des Nichtlastsegments 16. Die Profilierung ψv des Lastsegments 17 und des Nichtlastsegments 16 liegen in einem Bereich von 1 bis 3, die des Lastsegments 17 in einem Bereich von 1,5 bis 1,8 und die Profilierung ψv des Nichtlastsegments 16 in einem Bereich von 1,2 bis 1,5.

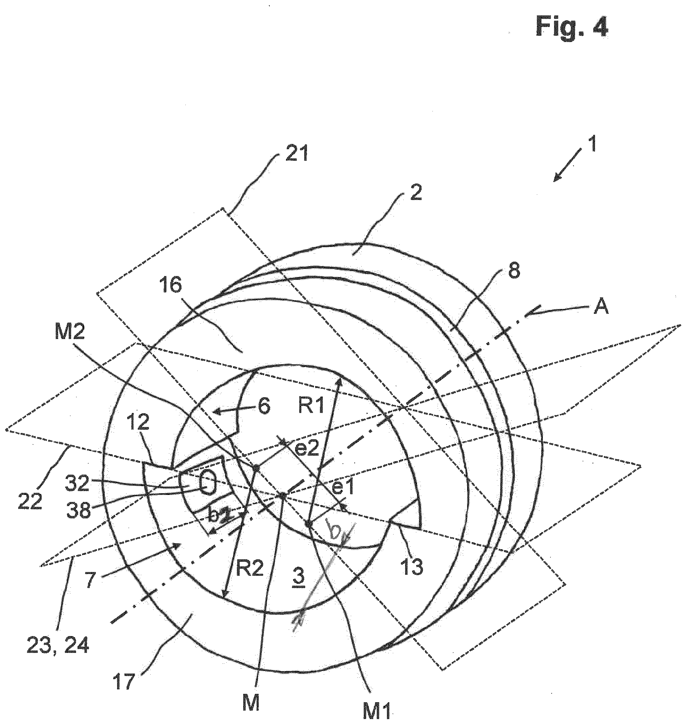

In Fig. 4 ist nochmals die dreidimensionale Darstellung des beispielhaften hydrodynamischen Gleitlagers 1 aus Fig. 1 gezeigt, wobei in die Abbildung zusätzlich auch die zu Fig. 2 und Fig. 3 erläuterten Merkmale und Details eingetragen sind.

Um das Öl an den Stellen zu haben, wo es tatsächlich benötigt wird, beträgt das das Verhältnis der Breite b2 der Ölversorgungstasche 32 am Lastsegment (17) zur Breite b des Lagers im Bereich von jeweils einschließlich 0,6 bis 0,7 und das Verhältnis der Breite der Ölversorgungstasche 31 am Nichtlastsegment 16 zur Breite des Lagers im Bereich von jeweils einschließlich 0,35 bis 0,5.

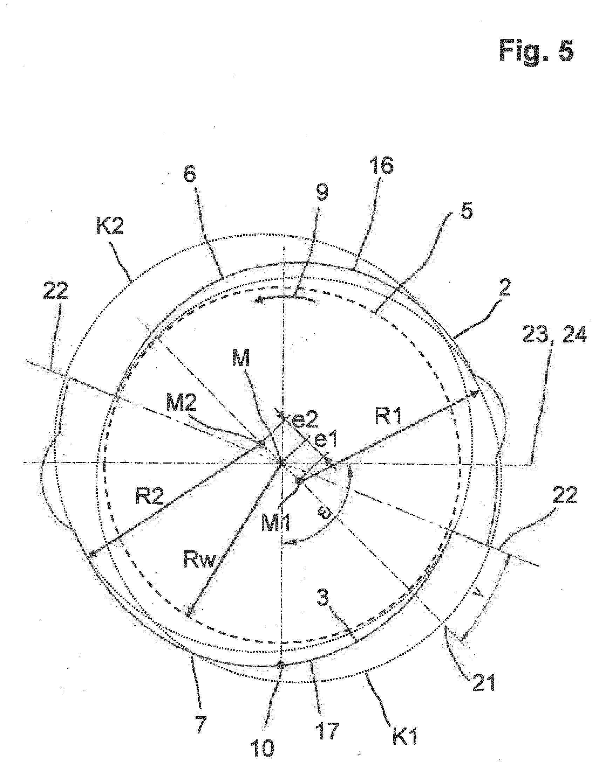

Fig. 5 zeigt eine weitere Darstellung eines Axialschnitts der Innenkontur einer weiteren Ausführungsform eines erfindungsgemäßen beispielhaften hydrodynamischen Gleitlagers 1. Die spezifischen Merkmale des vorgeschlagenen Gleitlagers sind zur besseren Sichtbarkeit in dieser Figur ebenfalls überzeichnet dargestellt. Die Ausführungsform der Fig. 5 unterscheidet sich von der in den Figuren 1 bis 4 gezeigten Ausführungsform des hydrodynamischen Gleitlagers dadurch, dass die Geometrie der beiden Flächenabschnitte 6, 7 nicht kreisförmig, sondern parabelförmig ausgeführt ist. Wie in Verbindung mit Fig. 5 erkennbar ist, ist in die Flächenabschnitte 6, 7 im dargestellten Axialschnitt jeweils ein Kreis K1, K2 einbeschreibbar, der einen größeren Radius R1, R2 aufweist, als den Radius Rw der umlaufenden Welle 5. Ferner weisen die Mittelpunkte M1, M2 der beiden in die Parabelbögen einbeschriebenen Kreise K1, K2 jeweils eine Exzentrizität e1, e2 gegenüber dem Mittelpunkt der Lagerschale auf. Die Exzentrizität e2 des Lastsegments 17 ist auch hier größer, als die Exzentrizität e1 des Nichtlastsegments 16.

**BEZUGSZEICHENLISTE**

| | |
|---|---|
| 1 | Hydrodynamisches Gleitlager |
| 2 | Lagerschale |
| 3 | Lagerfläche |
| 5 | Welle |
| 6 | Flächenabschnitt |
| 7 | Flächenabschnitt |
| 8 | Ölversorgungsnut |
| 9 | Drehrichtung der Welle |
| 10 | Schalenmitte |
| 12 | Versatz |
| 13 | Versatz |
| 16 | Nichtlastsegment |
| 17 | Lastsegment |
| 21 | Versatzebene |
| 22 | Versatzpunktebene |
| 23 | virtuelle Teilfugenebene |
| 24 | Trennfugenebene |
| 31 | Ölversorgungstasche |
| 32 | Ölversorgungstasche |
| 38 | Ölbohrung |

| | |
|---|---|
| A | Lagerachse |
| K1, K2 | einbeschriebener Kreis |
| R1, R2 | Radius des einbeschriebenen Kreises |
| Rw | Radius der umlaufenden Welle |
| M | Mittelpunkt der Lagerschale |
| M1, M2 | Mittelpunkt des einbeschriebenen Kreises |
| Ls1, Ls2 | radiales Lagerspiel |
| b | Lagerbreite |
| b1, b2 | Breite der Ölversorgungstasche |
| e1, e2 | Exzentrizität |
| $\alpha 1, \alpha 2$ | Taschenlagewinkel |
| $\beta 1, \beta 1$ | Öffnungswinkel der Ölversorgungstasche |
| $\gamma$ | Versatzwinkel |
| $\delta$ | Trennfugenwinkel |
| $\vartheta$ | Teilfugenwinkel |
| $\varphi$ | Standardlastwinkel |
| $\varepsilon$ | Mittenwinkel |
| $\psi v$ | Profilierung |

**Patentansprüche**

1. Hydrodynamisches Gleitlager mit einer Lagerschale (2), deren innere Oberfläche eine Lagerfläche (3) für eine umlaufende Welle (5) ausbildet, wobei die Lagerfläche (3) zur Ausbildung eines Lagers mit Mehrkeilbohrung wenigstens zwei in Umfangsrichtung der Lagerschale (2) hintereinander angeordnete Flächenabschnitte (6, 7) aufweist, wobei wenigstens ein Flächenabschnitt (7) ein Lastsegment (17) ausbildet und wenigstens ein Flächenabschnitt (6) ein Nichtlastsegment (16) ausbildet, wobei in die wenigstens zwei Flächenabschnitte (6, 7) in einem Axialschnitt jeweils ein Kreis (K1, K2) einbeschreibbar ist, der einen größeren Radius (R1, R2) aufweist, als den Radius (Rw) der umlaufenden Welle (5) und dass die Mittelpunkte (M1, M2) der wenigstens zwei einbeschreibbaren Kreise (K1, K2) jeweils eine Exzentrizität (e1, e2) gegenüber dem Mittelpunkt (M) der Lagerschale (2) aufweisen, wobei die Mittelpunkte (M1, M2) der in die wenigstens zwei Flächenabschnitte (6, 7) einbeschreibbaren Kreise (K1, K2) in einer durch den Mittelpunkt (M) der Lagerschale (2) verlaufenden Versatzebene (21) angeordnet sind und die jeweilige Exzentrizität (e1, e2) dem Abstand des Mittelpunkts (M1, M2) des einbeschreibbaren Kreises (K1, K2) vom Mittelpunkt (M) der Lagerschale (2) in der Versatzebene (21) entspricht; die wenigstens zwei Flächenabschnitte (6, 7) an einen zwischen ihnen angeordneter Versatz (12, 13) angrenzen und zwei zwischen Flächenabschnitten (6, 7) angeordnete Versätze (12, 13) diametral gegenüberliegend in einer durch den Mittelpunkt (M) der Lagerschale (2) verlaufenden Versatzpunktebene (22) angeordnet sind, wobei die Versatzpunktebene (22) in einem Versatzwinkel ($\gamma$) zur Versatzebene (21) angeordnet ist, wobei der Versatzwinkel ($\gamma$) zwischen 0° und 40° beträgt wobei eine virtuelle Teilfugenebene (23) in einem Teilfugenwinkel ($\vartheta$) gegenüber der Versatzpunktebene (22) verschwenkt angeordnet ist, **dadurch gekennzeichnet, dass** die Exzentrizität (e2) des Lastsegments (17) größer ist, als die Exzentrizität (e1) des Nichtlastsegments (16).

2. Hydrodynamisches Gleitlager gemäß Anspruch 1, **dadurch gekennzeichnet, dass** die Differenz zwischen den Exzentrizitäten (e1, e2) zwischen 10% und 70% beträgt.

3. Hydrodynamisches Gleitlager gemäß Anspruch 1 oder 2, **gekennzeichnet durch** wenigstens eine an der Lagerfläche (3) angeordnete Ölversorgungstasche (31, 32), die in einem Taschenlagewinkel ($\alpha 1, \alpha 2$) in Drehrichtung (9) der Welle (5) nach dem Versatz (12, 13) angeordnet ist, wobei der Taschenlagewinkel ($\alpha 1, \alpha 2$) zwischen 0° bis 40° beträgt.

4. Hydrodynamisches Gleitlager gemäß Anspruch 3, **dadurch gekennzeichnet, dass** der Taschenlagewinkel ($\alpha 1$), in welchem eine erste Ölversorgungstasche (31) in Drehrichtung (9) der Welle (5) nach einem ersten Versatz (13) angeordnet ist, unabhängig von dem Taschenlagewinkel ($\alpha 2$) ist, in welchem eine zweite Ölversorgungstasche (32) in Drehrichtung (9) der Welle (5) nach einem zweiten Versatz (12) angeordnet ist.

5. Hydrodynamisches Gleitlager gemäß Anspruch 3 bis 4, **dadurch gekennzeichnet, dass** die am Lastsegment (17) angeordnete Ölversorgungstasche in einem Taschenlagewinkel in Drehrichtung (9) der Welle (5) nach dem Versatz angeordnet ist, wobei der Taschenlagewinkel zwischen 20° bis 30°, vorzugsweise zwischen 20° und 25° beträgt und der Taschenlagewinkel des Nichtlastsegmentes im Bereich von 30° bis 35° beträgt.

6. Hydrodynamisches Gleitlager gemäß wenigstens einem der Ansprüche 3 bis 5, **dadurch gekennzeichnet, dass** jede Ölversorgungstasche (31, 32) mit einer Ölbohrung (38) zur Versorgung des Gleitlagers (1) mit Öl verbunden ist, wobei der Querschnitt der Ölbohrung (38) einer Ölversorgungstasche (31, 32) eines Gleitlagers (1) mit größerem Lagernenndurchmesser insbesondere größer ist, als der Querschnitt der Ölbohrung (38) einer Ölversorgungstasche (31, 32) eines Gleitlagers (1) mit kleinerem Lagernenndurchmesser.

7. Hydrodynamisches Gleitlager gemäß wenigstens einem der Ansprüche 3 bis 6, **dadurch gekennzeichnet, dass** ein erster Öffnungswinkel ($\beta1$), der die Öffnung einer ersten Ölversorgungstasche (31) entlang der Lagerfläche (3) beschreibt, unabhängig von einem zweiten Öffnungswinkel ($\beta2$) ist, der die Öffnung einer zweiten Ölversorgungstasche (32) entlang der Lagerfläche (3) beschreibt, wobei der jeweilige Öffnungswinkel ($\beta1$, $\beta2$) zwischen 10° und 30° beträgt.

8. Hydrodynamisches Gleitlager gemäß Anspruch 7, **dadurch gekennzeichnet, dass** der jeweilige Öffnungswinkel ($\beta1$, $\beta2$) zwischen 12° und 22° beträgt.

9. Hydrodynamisches Gleitlager gemäß wenigstens einem der Ansprüche 3 bis 8, **dadurch gekennzeichnet, dass** die Breite ($b1$) einer ersten Ölversorgungstasche (31) an der Lagerfläche unabhängig von der Breite ($b2$) einer zweiten Ölversorgungstasche (32) an der Lagerfläche (3) ist.

10. Hydrodynamisches Gleitlager gemäß wenigstens einem der Ansprüche 3 bis 9, **dadurch gekennzeichnet, dass** das Verhältnis der Breite ($b2$) der Ölversorgungstasche (32) am Lastsegment (17) zur Breite ($b$) des Lagers im Bereich von jeweils einschließlich 0,6 bis 0,7 beträgt und das Verhältnis der Breite ($b1$) der Ölversorgungstasche (31) am Nichtlastsegment (16) zur Breite des Lagers im Bereich von jeweils einschließlich 0,

11. Hydrodynamisches Gleitlager gemäß einem der Ansprüche 1 bis 10, **dadurch gekennzeichnet, dass** der Versatzwinkel ($\gamma$) zwischen 15° und 25° beträgt.

12. Hydrodynamisches Gleitlager gemäß wenigstens einem der Ansprüche 1 bis 11, **dadurch gekennzeichnet, dass** der Teilfugenwinkel ($\vartheta$) insbesondere 20° beträgt.

13. Hydrodynamisches Gleitlager gemäß einem der Ansprüche 1 bis 12, **dadurch gekennzeichnet, dass** die Schalenmitte (10) in einem Mittenwinkel ($\varepsilon$) zur virtuellen Teilfugenebene (23) angeordnet ist, welcher insbesondere 90° beträgt.

14. Hydrodynamisches Gleitlager gemäß Anspruch 13, **dadurch gekennzeichnet, dass** das Gleitlager (1) für einen Standardlastwinkel ($\varphi$) vorgesehen ist, der in Drehrichtung (9) der Welle (5) bezogen auf die Schalenmitte (10) zwischen -10° und 25° und insbesondere zwischen 5° und 10° beträgt.

15. Hydrodynamisches Gleitlager gemäß wenigstens einem der vorhergehenden Ansprüche, **dadurch gekennzeichnet, dass** die Lagerschale (2) zwei Lagerschalenhälften aufweist, die sich jeweils über 180° der Lagerfläche (3) erstrecken und an einer Trennfuge in einer Trennfugenebene (24) zusammengefügt sind.

16. Hydrodynamisches Gleitlager gemäß Anspruch 15, **dadurch gekennzeichnet, dass** die Trennfugenebene (24) in einem Trennfugenwinkel ($\delta$) gegenüber der Versatzebene verschwenkt ist, wobei der Trennfugenwinkel ($\delta$) zwischen 10° und 80° beträgt.

17. Hydrodynamisches Gleitlager gemäß Anspruch 16, **dadurch gekennzeichnet, dass** der Trennfugenwinkel ($\delta$) zwischen 35° und 45° beträgt.

18. Hydrodynamisches Gleitlager gemäß wenigstens einem der Ansprüche 15 bis 17, **dadurch gekennzeichnet, dass** der Trennfugenebene (24) der virtuellen Teilfugenebene (23) entspricht.

19. Hydrodynamisches Gleitlager gemäß wenigstens einem der vorhergehenden Ansprüche, **dadurch gekennzeichnet, dass** die Geometrie wenigstens eines Flächenabschnitts (6, 7) als mathematische Funktion beschreibbar ist.

20. Hydrodynamisches Gleitlager gemäß Anspruch 19, **dadurch gekennzeichnet, dass** die Geometrie wenigstens eines Flächenabschnitts (6, 7) ein Kreisbogen, ein Ellipsenbogen, ein Hyperbelbogen, ein Parabelbogen oder auch ein Kurvenabschnitt mit einer mathematischen Ordnung von zwei oder höher ist.

21. Hydrodynamisches Gleitlager gemäß wenigstens einem der vorhergehenden Ansprüche, **dadurch gekennzeichnet, dass** die wenigstens zwei Flächenabschnitte (6, 7) eine unterschiedliche Profilierung ($\psi v$) aufweisen, wobei die Profilierung ($\psi v$) definiert ist durch die Summe aus der Exzentrizität ($e1$, $e2$) des jeweiligen Flächenabschnitts (6, 7) und dem radialem Lagerspiel ($Ls1$, $Ls2$), bezogen auf das radiale Lagerspiel ($Ls1$, $Ls2$).

22. Hydrodynamisches Gleitlager gemäß Anspruch 21, **dadurch gekennzeichnet, dass** die Profilierung ($\psi$v) des Lastsegments (17) größer ist, als die Profilierung des Nichtlastsegments (16).

23. Hydrodynamisches Gleitlager gemäß wenigstens einem der Ansprüche 21 oder 22, **dadurch gekennzeichnet, dass** sowohl die Profilierung ($\psi$v) des Lastsegments (17) als auch die Profilierung ($\psi$v) des Nichtlastsegments (16) in einem Bereich von 1 bis 3 liegt.

24. Hydrodynamisches Gleitlager gemäß wenigstens einem der Ansprüche 21 bis 23, **dadurch gekennzeichnet, dass** die Profilierung ($\psi$v) des Lastsegments (17) in einem Bereich von 1,5 bis 1,8 liegt.

25. Hydrodynamisches Gleitlager gemäß wenigstens einem der Ansprüche 21 bis 24, **dadurch gekennzeichnet, dass** die Profilierung ($\psi$v) des Nichtlastsegments (16) in einem Bereich von 1,2 bis 1,5 liegt.

**Claims**

1. Hydrodynamic sliding bearing having a bearing shell (2) whose inner surface forms a bearing surface (3) for a rotation shaft (5), wherein the bearing surface (3) has at least two surface portions (6, 7), which are arranged one behind the other in the circumferential direction of the bearing shell (2), to form a bearing having a multi-wedge bore, wherein at least one surface portion (7) forms a load segment (17) and at least one surface portion (6) forms a non-load segment (16), wherein in each case a circle (K1, K2) can be inscribed in the at least two surface portions (6, 7) in an axial section and has a greater radius (R1, R2) than the radius (Rw) of the rotation shaft (5), and wherein the centre points (M1, M2) of the at least two inscribable circles (K1, K2) each have an eccentricity (e1, e2) with respect to the centre point (M) of the bearing shell (2), wherein the centre points (M1, M2) of the circles (K1, K2) which can be inscribed in the at least two surface portions (6, 7) are arranged in an offset plane (21) running through the centre point (M) of the bearing shell (2), and the respective eccentricity (e1, e2) corresponds to the distance of the centre point (M1, M2) of the inscribable circle (K1, K2) from the centre point (M) of the bearing shell (2) in the offset plane (21); the at least two surface portions (6, 7) adjoin an offset (12, 13) arranged between them, and two offsets (12, 13) arranged between surface portions (6, 7) are arranged diametrically opposite one another in an offset point plane (22) running through the centre point (M) of the bearing shell (2), wherein the offset point plane (22) is arranged at an offset angle ($\gamma$) to the offset plane (21), wherein the offset angle ($\gamma$) is between 0° and 40°, wherein a virtual parting line plane (23) is arranged pivoted with respect to the offset point plane (22) at a parting line angle ($\theta$), **characterized in that** the eccentricity (e2) of the load segment (17) is greater than the eccentricity (e1) of the non-load segment (16).

2. Hydrodynamic sliding bearing according to Claim 1, **characterized in that** the difference between the eccentricities (e1, e2) is between 10% and 70%.

3. Hydrodynamic sliding bearing according to Claim 1 or 2, **characterized by** at least one oil supply pocket (31, 32) which is arranged on the bearing surface (3) and which is arranged downstream of the offset (12, 13) in the direction of rotation (9) of the shaft (5) at a pocket position angle ($\alpha$1, $\alpha$2), wherein the pocket position angle ($\alpha$1, $\alpha$2) is between 0° and 40°.

4. Hydrodynamic sliding bearing according to Claim 3, **characterized in that** the pocket position angle ($\alpha$1) at which a first oil supply pocket (31) is arranged downstream of a first offset (13) in the direction of rotation (9) of the shaft (5) is independent of the pocket position angle ($\alpha$2) at which a second oil supply pocket (32) is arranged downstream of a second offset (12) in the direction of rotation (9) of the shaft (5).

5. Hydrodynamic sliding bearing according to Claims 3 and 4, **characterized in that** the oil supply pocket arranged on the load segment (17) is arranged downstream of the offset in the direction of rotation (9) of the shaft (5) at a pocket position angle, wherein the pocket position angle is between 20° and 30°, preferably between 20° and 25°, and the pocket position angle of the non-load segment is in the range from 30° to 35°.

6. Hydrodynamic sliding bearing according to at least one of Claims 3 to 5, **characterized in that** each oil supply pocket (31, 32) is connected to an oil bore (38) for supplying the sliding bearing (1) with oil, wherein the cross section of the oil bore (38) of an oil supply pocket (31, 32) of a sliding bearing (1) having a greater bearing nominal diameter is in particular greater than the cross section of the oil bore (38) of an oil supply pocket (31, 32) of a sliding bearing (1) having a smaller bearing nominal diameter.

7. Hydrodynamic sliding bearing according to at least one of Claims 3 to 6, **characterized in that** a first opening angle ($\beta$1), which describes the opening of a first oil supply pocket (31) along the bearing surface (3), is independent of a second opening angle ($\beta$2), which describes the opening of a second oil supply pocket (32) along the bearing surface (3), wherein the respective opening angle ($\beta$1, $\beta$2) is between 10° and 30°.

8. Hydrodynamic sliding bearing according to Claim 7, **characterized in that** the respective opening angle ($\beta$1, $\beta$2) is between 12° and 22°.

9. Hydrodynamic sliding bearing according to at least one of Claims 3 to 8, **characterized in that** the width (b1) of a first oil supply pocket (31) on the bearing surface is independent of the width (b2) of a second oil supply pocket (32) on the bearing surface (3).

10. Hydrodynamic sliding bearing according to at least one of Claims 3 to 9, **characterized in that** the ratio of the width (b2) of the oil supply pocket (32) on the load segment (17) to the width (b) of the bearing is in the range from 0.6 to 0.7, in each case inclusive, and the ratio of the width (b1) of the oil supply pocket (31) on the non-load segment (16) to the width of the bearing is in the range of 0, in each case inclusive.

11. Hydrodynamic sliding bearing according to one of Claims 1 to 10, **characterized in that** the offset angle ($\gamma$) is between 15° and 25°.

12. Hydrodynamic sliding bearing according to at least one of Claims 1 to 11, **characterized in that** the parting line angle ($\theta$) is in particular 20°.

13. Hydrodynamic sliding bearing according to one of Claims 1 to 12, **characterized in that** the shell centre (10) is arranged at a centre angle ($\varepsilon$) to the virtual parting line plane (23) that is in particular 90°.

14. Hydrodynamic sliding bearing according to Claim 13, **characterized in that** the sliding bearing (1) is provided for a standard load angle ($\varphi$) which is between -10° and 25° and in particular between 5° and 10° with respect to the shell centre (10) in the direction of rotation (9) of the shaft (5).

15. Hydrodynamic sliding bearing according to at least one of the preceding claims, **characterized in that** the bearing shell (2) has two bearing shell halves which each extend over 180° of the bearing surface (3) and are joined together at a parting joint in a parting joint plane (24).

16. Hydrodynamic sliding bearing according to Claim 15, **characterized in that** the parting joint plane (24) is pivoted with respect to the offset plane at a parting joint angle ($\delta$), wherein the parting joint angle ($\delta$) is between 10° and 80°.

17. Hydrodynamic sliding bearing according to Claim 16, **characterized in that** the parting joint angle ($\delta$) is between 35° and 45°.

18. Hydrodynamic sliding bearing according to at least one of Claims 15 to 17, **characterized in that** the parting joint plane (24) corresponds to the virtual parting line plane (23).

19. Hydrodynamic sliding bearing according to at least one of the preceding claims, **characterized in that** the geometry of at least one surface portion (6, 7) can be described as a mathematical function.

20. Hydrodynamic sliding bearing according to Claim 19, **characterized in that** the geometry of at least one surface portion (6, 7) is a circular arc, an elliptical arc, a hyperbolic arc, a parabolic arc or else a curved portion having a mathematical order of two or more.

21. Hydrodynamic sliding bearing according to at least one of the preceding claims, **characterized in that** the at least two surface portions (6, 7) have a different profiling ($\psi$v), wherein the profiling ($\psi$v) is defined by the sum of the eccentricity (e1, e2) of the respective surface portion (6, 7) and the radial bearing play (Ls1, Ls2), with respect to the radial bearing play (Ls1, Ls2).

22. Hydrodynamic sliding bearing according to Claim 21, **characterized in that** the profiling ($\psi$v) of the load segment (17) is greater than the profiling of the non-load segment (16).

23. Hydrodynamic sliding bearing according to at least one of Claims 21 and 22, **characterized in that** both the profiling ($\psi$v) of the load segment (17) and the profiling ($\psi$v) of the non-load segment (16) lie in a range from 1 to 3.

24. Hydrodynamic sliding bearing according to at least one of Claims 21 to 23, **characterized in that** the profiling ($\psi$v) of the load segment (17) lies in a range from 1.5 to 1.8.

25. Hydrodynamic sliding bearing according to at least one of Claims 21 to 24, **characterized in that** the profiling ($\psi$v) of the non-load segment (16) lies in a range from 1.2 to 1.5.

**Revendications**

1. Palier lisse hydrodynamique comportant un coussinet de palier (2), dont la surface intérieure forme une surface de palier (3) pour un arbre rotatif (5), la surface de palier (3), pour former un palier comportant un alésage à plusieurs clavettes, présentant au moins deux parties de surface (6, 7) disposées les unes derrière les autres dans la direction périphérique du coussinet de palier (2), au moins une partie de surface (7) formant un segment de charge (17) et au moins une partie de surface (6) formant un segment de non charge (16), un cercle (K1, K2) pouvant être inscrit respectivement dans les au moins deux parties de surface (6, 7) dans une coupe axiale, lequel cercle présente un plus grand rayon (R1, R2) que le rayon (Rw) de l'arbre rotatif (5) et les centres (M1, M2) des au moins deux cercles (K1, K2) pouvant être inscrits présentant respectivement une excentricité (e1, e2) par rapport au centre (M) du coussinet de palier (2), les centres (M1, M2) des cercles (K1, K2) pouvant être inscrits dans les au moins deux parties de surface (6, 7) étant disposés dans un plan de décalage (21) passant par le centre (M) du coussinet de palier (2) et l'excentricité (e1, e2) respective correspondant à la distance du centre (M1, M2) du cercle (K1, K2) pouvant être inscrit au centre (M) du coussinet de palier (2) dans le plan de décalage (21) ; les au moins deux parties de surface (6, 7) étant adjacentes à un décalage (12, 13) disposé entre elles et deux décalages (12, 13) disposés entre des parties de surface (12, 13) étant disposés de manière diamétralement opposée dans un plan de point de décalage (22) passant par le centre (M) du coussinet de palier (2), le plan de point de décalage (22) étant disposé suivant un angle de décalage (γ) par rapport au plan de décalage (21), l'angle de décalage (γ) valant entre 0° et 40°, un plan de jointure partielle virtuel (23) étant disposé de manière pivotée suivant un angle de jointure partielle (θ) par rapport au plan de point de décalage (22), **caractérisé en ce que** l'excentricité (e2) du segment de charge (17) est supérieure à l'excentricité (e1) du segment de non charge (16).

2. Palier lisse hydrodynamique selon la revendication 1, **caractérisé en ce que** la différence entre les excentricités (e1, e2) vaut entre 10% et 70%.

3. Palier lisse hydrodynamique selon la revendication 1 ou 2, **caractérisé par** au moins une cavité d'alimentation en huile (31, 32) disposée sur la surface de palier (3), laquelle cavité est disposée suivant un angle de position de cavité (α1, α2) après le décalage (12, 13) dans le sens de rotation (9) de l'arbre (5), l'angle de position de cavité (α1, α2) valant entre 0° et 40°.

4. Palier lisse hydrodynamique selon la revendication 3, **caractérisé en ce que** l'angle de position de cavité (α1), suivant lequel une première cavité d'alimentation en huile (31) est disposée après un premier décalage (13) dans le sens de rotation (9) de l'arbre (5), est indépendant de l'angle de position de cavité (α2) suivant lequel une deuxième cavité d'alimentation en huile (32) est disposée après un deuxième décalage (12) dans le sens de rotation (9) de l'arbre (5).

5. Palier lisse hydrodynamique selon les revendications 3 et 4, **caractérisé en ce que** la cavité d'alimentation en huile disposée sur le segment de charge (17) est disposée suivant un angle de position de cavité après le décalage dans le sens de rotation (9) de l'arbre (5), l'angle de position de cavité valant entre 20° et 30°, de préférence entre 20° et 25° et l'angle de position de cavité du segment de non charge étant compris dans la plage de 30° à 35°.

6. Palier lisse hydrodynamique selon au moins l'une des revendications 3 à 5, **caractérisé en ce que** chaque cavité d'alimentation en huile (31, 32) est reliée à un alésage d'huile (38) servant à l'alimentation du palier lisse (1) en huile, la section transversale de l'alésage d'huile (38) d'une cavité d'alimentation en huile (31, 32) d'un palier lisse (1) de diamètre nominal de palier plus grand étant en particulier plus grande que la section transversale de l'alésage d'huile (38) d'une cavité d'alimentation en huile (31, 32) d'un palier lisse (1) de diamètre nominal de palier plus petit.

7. Palier lisse hydrodynamique selon au moins l'une des revendications 3 à 6, **caractérisé en ce qu'**un premier angle d'ouverture (β1), qui décrit l'ouverture d'une première cavité d'alimentation en huile (31) le long de la surface de palier (3), est indépendant d'un deuxième angle d'ouverture (β2) qui décrit l'ouverture d'une deuxième cavité d'alimentation en huile (32) le long de la surface de palier (3), l'angle d'ouverture (β1, β2) respectif valant entre 10° et 30°.

8. Palier lisse hydrodynamique selon la revendication 7, **caractérisé en ce que** l'angle d'ouverture (β1, β2) respectif vaut entre 12° et 22°.

9. Palier lisse hydrodynamique selon au moins l'une des revendications 3 à 8, **caractérisé en ce que** la largeur (b1) d'une première cavité d'alimentation en huile (31) sur la surface de palier est indépendante de la largeur (b2) d'une deuxième cavité d'alimentation en huile (32) sur la surface de palier (3).

10. Palier lisse hydrodynamique selon au moins l'une des revendications 3 à 9, **caractérisé en ce que** le rapport de la largeur (b2) de la cavité d'alimentation en huile (32) sur le segment de charge (17) à la largeur (b) du palier est compris dans la plage de respectivement 0,6 à 0,7 inclus et le rapport de la largeur (b1) de la cavité d'alimentation en huile (31) sur le segment de non charge (16) à la largeur du palier est dans la plage de respectivement 0 inclus.

11. Palier lisse hydrodynamique selon l'une des revendications 1 à 10, **caractérisé en ce que** l'angle de décalage (γ) vaut entre 15° et 25°.

12. Palier lisse hydrodynamique selon au moins l'une des revendications 1 à 11, **caractérisé en ce que** l'angle de jointure partielle (θ) vaut en particulier 20°.

13. Palier lisse hydrodynamique selon l'une des revendications 1 à 12, **caractérisé en ce que** le centre de coussinet (10) est disposé suivant un angle central (ε) par rapport au plan de jointure partielle (23), lequel angle vaut en particulier 90°.

14. Palier lisse hydrodynamique selon la revendication 13, **caractérisé en ce que** le palier lisse (1) est prévu pour un angle de charge standard (φ) qui vaut entre -10° et 25° et en particulier entre 5° et 10° par rapport au centre de coussinet (10) dans le sens de rotation (9) de l'arbre (5).

15. Palier lisse hydrodynamique selon au moins l'une des revendications précédentes, **caractérisé en ce que** le coussinet de palier (2) présente deux moitiés de coussinet de palier qui s'étendent respectivement sur 180° de la surface de palier (3) et sont jointes au niveau d'une jointure de séparation dans un plan de jointure de séparation (24).

16. Palier lisse hydrodynamique selon la revendication 15, **caractérisé en ce que** le plan de jointure de séparation (24) est pivoté suivant un angle de jointure de séparation (δ) par rapport au plan de décalage, l'angle de jointure de séparation (δ) valant entre 10° et 80°.

17. Palier lisse hydrodynamique selon la revendication 16, **caractérisé en ce que** l'angle de jointure de séparation (δ) vaut entre 35° et 45°.

18. Palier lisse hydrodynamique selon au moins l'une des revendications 15 à 17, **caractérisé en ce que** le plan de jointure de séparation (24) correspond au plan de jointure partielle virtuel (23).

19. Palier lisse hydrodynamique selon au moins l'une des revendications précédentes, **caractérisé en ce que** la géométrie d'au moins une partie de surface (6, 7) peut être décrite sous forme de fonction mathématique.

20. Palier lisse hydrodynamique selon la revendication 19, **caractérisé en ce que** la géométrie d'au moins une partie de surface (6, 7) est un arc de cercle, un arc d'ellipse, un arc d'hyperbole, un arc de parabole ou encore une partie de courbe présentant un ordre mathématique de deux ou plus.

21. Palier lisse hydrodynamique selon au moins l'une des revendications précédentes, **caractérisé en ce que** les au moins deux parties de surface (6, 7) présentent un profilage (ψv) différent, le profilage (ψv) étant défini par la somme de l'excentricité (e1, e2) de la partie de surface (6, 7) respective et du jeu de palier radial (Ls1, Ls2), par rapport au jeu de palier radial (Ls1, Ls2).

22. Palier lisse hydrodynamique selon la revendication 21, **caractérisé en ce que** le profilage (ψv) du segment de charge (17) est supérieur au profilage du segment de non charge (16).

23. Palier lisse hydrodynamique selon au moins l'une des revendications 21 ou 22, **caractérisé en ce qu'**à la fois le profilage (ψv) du segment de charge (17) et le profilage (ψv) du segment de non charge (16) sont situés dans une plage de 1 à 3.

24. Palier lisse hydrodynamique selon au moins l'une des revendications 21 à 23, **caractérisé en ce que** le profilage (ψv) du segment de charge (17) est situé dans une plage de 1,5 à 1,8.

25. Palier lisse hydrodynamique selon au moins l'une des revendications 21 à 24, **caractérisé en ce que** le profilage (ψv) du segment de non charge (16) est situé dans une plage de 1,2 à 1,5.

# Fig. 1

**Fig. 2**

**Fig. 3**

**Fig. 4**

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2015107048 A2
- RU 2013672 C1
- DE 102008045168 A1
- EP 3094873 A